# EUROPÄISCHE PATENTSCHRIFT

(11) **EP 1 281 500 B1**
(45) Veröffentlichungstag und Bekanntmachung des Hinweises auf die Patenterteilung: **07.03.2007**
(21) Anmeldenummer: 02014193.3
(22) Anmeldetag: 26.06.2002
(51) Int. Cl.: B29C 45/16

(54) **Formschliessvorrichtung für eine Spritzgiessmaschine**
Mould closing apparatus for an injection moulding machine
Dispositif de fermeture pour une machine à mouler par injection

(30) Priorität: 03.08.2001 DE 10164715
(43) Veröffentlichungstag der Anmeldung: 05.02.2003
(73) Patentinhaber: Krauss-Maffei Kunststofftechnik GmbH, 80997 München (DE)
(72) Erfinder: Wohlrab, Walter, 91781 Weissenburg (DE); Wobbe, Hans, Dr., 82211 Herrsching (DE)
(74) Vertreter: Zollner, Richard

(56) Entgegenhaltungen:
- EP-A- 0 794 045
- WO-A-00/12284
- DE-B- 1 009 484
- GB-A- 2 300 142

## Beschreibung

Die Erfindung betrifft eine Formschließvorrichtung für eine Spritzgießmaschine gemäß dem Oberbegriff des Patentanspruchs 1.

Formschließeinheiten für Spritzgießmaschinen sind allgemein bekannt. Beispielsweise ist aus der GB 2 300 142 eine Formschließeinheit bekannt, bei der zwei äußere Formaufspannplatten jeweils aus einer maschinenrahmenfesten Formaufspannplatte und einer verschieblich am Maschinenrahmen abgestützten Formaufspannplatte bestehen. Zusätzlich ist ein mittleres Formträgerelement über einen Tragrahmen ebenfalls verschieblich am Maschinenrahmen abgestützt.

Aus der EP 0 794 045 A1 ist eine Formschließvorrichtung mit zwei äußeren Formaufspannplatten und einem mittleren Formträgerelement bekannt (siehe Figur 20 und 21), wobei die eine der beiden äußeren Formaufspannplatten fest und die andere verschieblich auf einem Maschinenrahmen abgestützt sind. Den beiden äußeren Formaufspannplatten sind Einspritzaggregate zugeordnet, die jeweils auf einem eigenen Gestell abgestützt sind. Die der beweglichen Formaufspannplatte zugeordnete Einspritzeinheit ist über einen Rahmen an die Rückseite dieser Formaufspannplatte montiert.

Aus der WO 00/12284 A1 ist es bekannt, mehrere Extrusions- und Einspritzeinheiten mit zugehörigen Formhälften um einen zentralen Formträgerelement herum anzuordnen (siehe Figur 6). Es ist weiterhin aus diesem Dokument bekannt (siehe Figur 2), dass eine erste Einheit "A" aus Trichter, Extruder, Einspritzgerät, Formhälftenträger, Formhälfte, Gleitstück und Gleitschiene gebildet wird, die zusammen mit einer entsprechenden zweiten Einheit "B" auf einem gemeinsamen Maschiennbett angordnet ist. Die einzelnen Bestandteile der Einheiten "A" und "B" sind auf dem jeweiligen Gleitstück angordnet und damit fest verbunden.

Der vorliegenden Erfindung liegt die Aufgabe zugrunde, eine Formschließvorrichtung zu schaffen, bei der die Verfahrwege für Einspritzaggregate der Spritzgießmaschine kurz gehalten sind.

Diese Aufgabe wird durch die Merkmale des Patentanspruchs 1 gelöst; die weiteren Patentansprüche betreffen weitere Ausgestaltungen der Erfindung.

Erfindungsgemäß weist bei einer gattungsgemäßen Formschließvorrichtung zumindest eine der beiden Formaufspannplatten eine Halterung auf, auf der ein Einspritzaggregat anordenbar ist. Das Einspritzaggregat wird damit bei einer evtl. Bewegung der Formaufspannplatte mit transportiert, so dass der Relativhub des jeweiligen Einspritzaggregates gegenüber einer zugeordneten Formaufspannplatte klein, insbesondere gehalten werden kann.

Vorzugsweise sind die Säulen der Formschließeinheit an einem Ende in einer zu einer der Formaufspannplatten parallelen Abstützplatte befestigt, durchsetzen am anderen Ende die andere Formaufspannplatte und werden durch sägezahnförmig ineinandergreifende Elemente hinter der Formaufspannplatte verriegelt. Dabei ist es besonders vorteilhaft, wenn die Abstützplatte und die zugeordnete Formaufspannplatte eine Sandwichplatte mit zwischenliegendem hydraulischen Druckkolben bilden. Diese Plattenanordnung zeichnet sich durch eine sehr kurze Bauweise aus und stellt ein besonders steifes System dar, da nur die zur Erzeugung des Schließdruckes erforderliche Hydraulikölmenge notwendig ist. Größere, zu hoher Kompressibilität neigende Hydraulikölmengen können dabei vermieden werden oder werden nur zu der von der Schließdruckerzeugung funktionell entkoppelten Durchführung der Bewegungsantriebe (Schließen, Losreißen und Öffnen) verwendet.

In einer anderen vorteilhaften Ausgestaltung der Erfindung sind die Säulen auf der einen Seite in der einen Formaufspannplatte befestigt und auf der anderen Seite als Kolben ausgebildet, die in hydraulischen, mit der anderen äußeren Formaufspannplatte fest verbundenen Zylindern reversierbar geführt wird. Auch dieses Zweiplatten-Schließsystem mit zwischenliegender, maschinenrahmenfest gelagerter mittlerer Formträgereinheit zeichnet sich durch eine kurze Bauweise und hohe Steifigkeit aus.

Eine Ausführungsform der Erfindung wird anhand der beigefügten Zeichnung erläutert:

Es zeigen
- Fig. 1: die Seitenansicht einer Spritzgießmaschine mit einem maschinenrahmenfesten C-förmigen, offenen Tragrahmen
- Fig. 2: eine Schnittansicht gemäß der Schnittlinie V - V in Fig. 1 und
- Fig. 3: eine perspektivische Ansicht der Spritzgießmaschine nach Fig. 1

Herkömmliche Spritzgießmaschinen umfassen eine Formschließeinheit und zwei Einspritzaggregate. Die Formschließeinheit besteht üblicherweise aus einem Maschinenrahmen, auf dem Formaufspannplatten über Gleitschienen verschieblich abgestützt sind. Die Formaufspannplatten tragen Werkzeugteile, welche im zusammengefahrenen Zustand zur Ausbildung einer Kavität vorgesehen sind.

Im vorliegenden Ausführungsbeispiel wird die Erfindung anhand einer sogenannten Wendeplattenmaschinen vorgestellt, bei der zwischen den beiden äußeren Formaufspannplatten eine sich um eine Vertikalachse drehende Wendeplatte angeordnet ist, so dass sich zwischen den äußeren Formaufspannplatten und der Wendeplatte mit den entsprechenden Werkzeugteilen jeweils verschiedene Kavitäten ausbilden lassen.

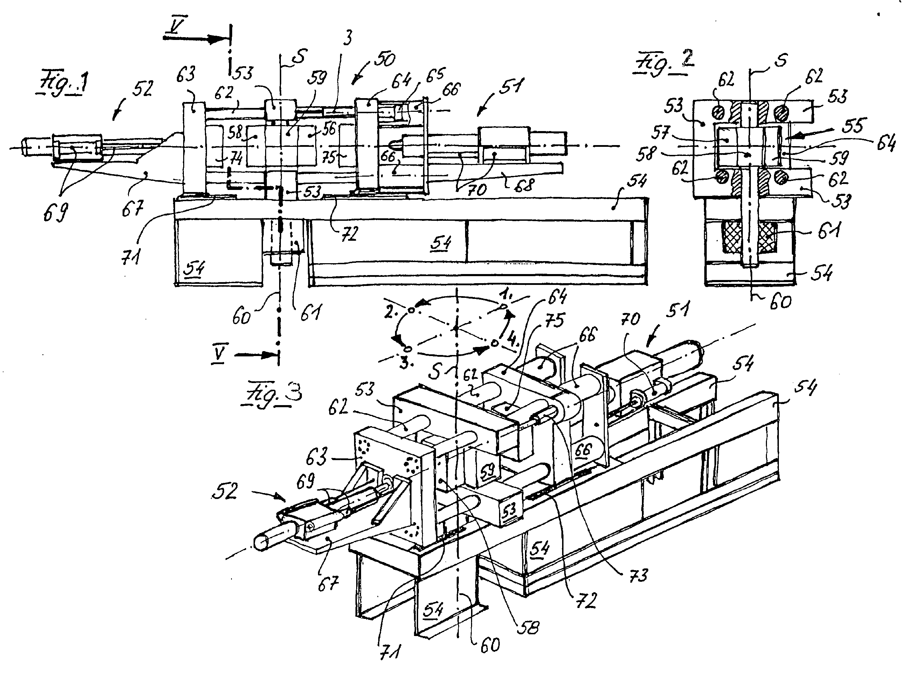

Die Fig. 1 zeigt eine Spritzgießmaschine mit einer Formschließeinheit 50 bestehend aus einer einstückigen äußeren Formaufspannplatte 63 in der Säulen 62 befestigt sind. Die Säulen 62 durchsetzen sowohl einen Tragrahmen 53 als auch eine rechte Formaufspannplatte 64, die überdies vier Hydraulikzylinder 65 aufweist. In den Hydraulikzylindern 65 sind die als Kolben ausgebildeten Enden der Säulen 62 reversierbar geführt. Mit diesen Kolben-Zylindereinheiten sind einerseits die Fahrbewegungen der Formschließeinheit 50 durchführbar, wie das Öffnen und das Schließen der Werkzeugformhälften 56, 58, 74, 75. Andererseits kann vorliegend damit auch der Schließdruck erzeugt werden. Die hierfür erforderliche Druckübersetzereinrichtung ist im Kolben integriert und nicht gesondert dargestellt.

Alternativ kann der Schließdruck auch über hydraulische Druckkissen aufgebracht werden, die bei einer sandwichartig ausgebildeten Formaufspannplatte zwischen eine sogenannte Abstützplatte und die Formaufspannplatte selbst zwischengeschaltet sind. Im Gegensatz zu der ersten Druckaufbaualternative erfolgt bei der zweiten Druckaufbaualternative eine Verriegelung der Säulen durch eine spezielle Verriegelungsvorrichtung.

Die Spritzgießmaschine gemäß den Figuren 1 bis 3 umfasst neben der Formschließeinheit 50 auch zwei Einspritzaggregate 51 und 52. Diese sind auf Halterungen 67 und 68 gelagert, die außenseitig der Formaufspannplatten nach Art eines Potestes angeordnet sind. Die Einspritzaggregate sind mit hydraulischen Stellelementen 69 und 70 an die Einspritz-Durchgangsöffnungen der Formaufspannplatten 63 und 64 heranfahrbar. Im vorliegenden Ausführungsbeispiel sind beide äußeren Formaufspannplatten beweglich ausgebildet. Durch die Anbringung der Einspritzaggregate an den Halterungen der jeweiligen Formaufspannplatten bewegen sich diese zusammen mit der jeweiligen Formaufspannplatte bei deren Verschiebung. Der Hub zum Vorschieben der jeweiligen Einspritzaggregate beim Einspritzvorgang selbst umfasst daher lediglich eine relativ kurze Strecke und nicht wie herkömmlicher Weise eine sich aus dieser kurzen Strecke sowie dem Verfahrweg der verfahrbaren Formaufspannplatte zusammengesetzten Weg.

Der zwischen den beiden Formaufspannplatten 63 und 64 angeordnete Tragrahmen 53 ist vorliegend C-förmig ausgestaltet und zur Bedienseite der Spritzgießmaschine hin offen. Der C-förmige Tragrahmen 53 ist mit dem Maschinenrahmen 54 fest verbunden und trägt, drehbar gelagert, ein Formträgerelement 55, auf dem vier mittige Werkzeughälften 56, 57, 58 und 59 aufgespannt sind. Die Drehachse 60 des Formträgerelementes 55 ist in beiden Schenkeln des C-förmigen Tragrahmens 53 gelagert und ist über einen im Maschinenrahmen 54 angeordneten Drehantrieb 61 taktweise antreibbar. Der C-förmige Tragrahmen 53 wird in Gleitführungen von vier Säulen 62 durchsetzt, die - wie bereits erwähnt - an einem Ende in der linken äußeren Formaufspannplatte 63 befestigt sind und am anderen Ende eine rechte äußere Formaufspannplatte 64 in Gleitführungen durchsetzen sowie mit Kolben 65 in vier Hydraulikzylindern 65 reversierbar geführt sind. Die beiden äußeren Formaufspannplatten 63 und 64 weisen - wie oben bereits erwähnt - Halterungen 67 und 68 für die Einspritzaggregate 51 und 52 auf, die mit hydraulischen Stellelementen 69 und 70 an die Einspritz-Durchgangsöffnungen der Formaufspannplatten 63 und 64 heranfahrbar sind.

Die äußeren Formaufspannplatten 63 und 64 sind auf Gleitschienen 71 und 72 auf dem Maschinenrahmen 54 verschieblich abgestützt. Die Verschiebung der äußeren Formaufspannplatten 63 und 64 erfolgt über zwei an den Ecken der Formaufspannplatte 64 diagonal gegenüberliege hydraulische Stellantriebe 73, von denen in den Figuren 1 und 3 nur der obere Stellantrieb sichtbar ist. Die Bewegung der linken äußeren Formaufspannplatte 63 erfolgt über die hydraulische Kolben-Zylindereinheiten 65 und 66.

Die vier mittigen Werkzeughälften 56, 57, 58 und 59 sind taktweise mit den auf den beiden äußeren Formaufspannplatten 63 und 64 angeordneten Werkzeughälften 74 und 75 zusammenschließbar.

Der Spritzvorgang wird nachfolgend anhand des taktmäßigen Durchlaufes der mittigen Werkzeughälfte 56 erläutert. Die vier jeweils um 90° versetzten Taktstellungen 1 bis 4 des würfelförmigen Formträgerelements 55 sind in Fig. 3 bezüglich der Schwenkachse S angegeben. Im ersten Takt werden die beiden Werkzeughälften 56 und 75 zusammengeschlossen und es wird ein Grundkörper gespritzt. Im zweiten Takt steht die Werkzeughälfte 55 dem senkrechten Schenkel des C-förmigen Tragrahmens 53 gegenüber. Der zuvor gespritzte Grundkörper kann dabei abkühlen. Im dritten Takt wird die Werkzeughälfte 56 mit der Werkzeughälfte 74 der linken äußeren Formaufspannplatte 63 zusammengeschlossen und der Grundkörper wird zu einem Zweikomponenten-Spritzgießteil vervollständigt. Im vierten Takt wird die Werkzeughälfte 56 in die Öffnung des C-förmigen Tragrahmens 53 geschwenkt. In dieser Stellung kann das fertige Zweikomponenten-Spritzgießteil leicht entnommen werden und die entleerte Werkzeughälfte 56 kann gegebenenfalls anschließend mit Einlegeteilen bestückt werden. Bei diesem Betriebsablauf erfolgt der Vorgang des Entnehmens während der Taktzeit, die von den Vorgängen Schließen, Schließdruckaufbau, Spritzen, Nachdruckphase bestimmt wird.

Die Verfahrbewegungen für die Formaufspannplatten 63 und 64 der vorbeschriebenen kann hydraulisch oder elektromechanisch über Kugelspindelantriebe erfolgen.

Mit der vorliegenden erfindungsgemäßen Ausführungsform lässt sich eine Spritzgießmaschine mit einer Formschließeinheit herstellen, bei der kurze Verfahrwege der Einspritzaggregate zu den jeweiligen Formaufspannplatten gewährleistet sind.

### Bezugszeichenliste

- 50.: Formschließeinheit
- 51.: Einspritzaggregat
- 52.: Einspritzaggregat
- 53.: C-förmiger Tragrahmen
- 54.: Maschinenrahmen
- 55.: Formträgerelement
- 56.: mittige Werkzeughälfte
- 57.: mittige Werkzeughälfte
- 58.: mittige Werkzeughälfte
- 59.: mittige Werkzeughälfte
- 60.: Drehachse
- 61.: Drehantrieb
- 62.: Säule
- 63.: Formaufspannplatte links
- 64.: Formaufspannplatte rechts
- 65.: Kolben
- 66.: Hydraulikzylinder
- 67.: Halterung
- 68.: Halterung
- 69.: hydraulisches Stellelement
- 70.: hydraulisches Stellelement
- 71.: Gleitschiene
- 72.: Gleitschiene
- 73.: hydraulischer Stellantrieb
- 74.: Werkzeughälfte links
- 75.: Werkzeughälfte rechts

## Patentansprüche

1. Formschließvorrichtung (50) für eine Spritzgießmaschine zur Herstellung von Kunststoffteilen, umfassend zumindest zwei äußere Formaufspannplatten (63, 64) und einen Maschinenrahmen (54), auf dem die zumindest zwei Formaufspannplatten (63, 64) abgestützt sind, wobei die zumindest zwei Formaufspannplatten (63, 64) mittels eines Antriebs (65, 66) relativ zueinander verfahrbar sind,
**dadurch gekennzeichnet,**
**dass** zumindest eine der Formaufspannplatten (63, 64) eine Halterung (67, 68) aufweist, auf der ein Einspritzaggregat (51, 52) gelagert ist.

2. Formschließeinrichtung nach Anspruch 1, **dadurch gekennzeichnet, dass** zumindest diejenige Formaufspannplatte eine Halterung aufweist, welche relativ zum Maschinenrahmen verfahrbar ist.

3. Formschließvorrichtung nach Anspruch 1 oder 2, **dadurch gekennzeichnet, dass** die Formaufspannplatten durch Säulen miteinander verbunden sind.

4. Formschließvorrichtung nach Anspruch 3, **dadurch gekennzeichnet, dass** die Säulen an einem Ende in einer zu einer zugeordneten Formaufspannplatte parallelen Abstützplatte befestigt sind und am anderen Ende die andere Formaufspannplatte durchsetzen und mit dieser verriegelbar sind.

5. Formschließvorrichtung nach Anspruch 4, **dadurch gekennzeichnet, dass** die Abstützplatte und die Formaufspannplatte ein Sandwichplatte mit zwischenliegendem, hydraulischen Druckkolben bilden.

6. Formschließvorrichtung nach Anspruch 4, **dadurch gekennzeichnet, dass** zwischen der Abstützplatte und einer beweglichen Formaufspannplatte ein Kniehebelschließsystem angeordnet ist.

7. Formschließvorrichtung nach Anspruch 1, **dadurch gekennzeichnet, dass** die Säulen an einem Ende in einer der Formaufspannplatten befestigt sind und am anderen Ende Kolben aufweisen, die in einer jeweiligen, mit der anderen Formaufspannplatte verbundenen Zylindereinheit reversierbar geführt sind, wobei die aus Kolben- und Zylindereinheit bestehende Stelleinheit zur Durchführung der Öffnungs- und Schließbewegung und zur Erzeugung des Schließdruckes der Formschließvorrichtung ausgelegt ist.

## Claims

1. A mould closing apparatus (50) for an injection moulding machine for producing plastic parts, comprising at least two outer mould clamping plates (63, 64) and a machine frame (54) on which the at least two mould clamping plates (63, 64) are supported, wherein the at least two mould clamping plates (63, 64) can be moved relative to one another by means of a drive (65, 66),
**characterised in that**
at least one of the mould clamping plates (63, 64) has a holder (67, 68) on which an injection moulding unit (51, 52) is mounted.

2. The mould closing apparatus according to claim 1, **characterised in that** at least that mould clamping plate has a holder which can be moved relative to the machine frame.

3. The mould closing apparatus according to claim 1 or 2, **characterised in that** the mould clamping plates are interconnected by pillars.

4. The mould closing apparatus according to claim 3, **characterised in that** at one end the pillars are fixed in a supporting plate parallel to the allocated mould clamping plate and at the other end, said pillars pass through said mould clamping plate and are locked with said clamping plate.

5. The mould closing apparatus according to claim 4, **characterised in that** the supporting plate and the mould clamping plate form a sandwich plate with an interposed hydraulic pressure plunger.

6. The mould closing apparatus according to claim 4, **characterised in that** a toggle closing system is disposed between the supporting plate and a movable mould clamping plate.

7. The mould closing apparatus according to claim 1, **characterised in that** at one end the pillars are fixed in one of the mould clamping plates and at the other end, said pillars have plungers which are reversibly guided in a respective cylinder unit connected to the other mould clamping plate, wherein the adjusting unit composed of plunger and cylinder unit is designed for executing the opening and closing movement and for producing the closing pressure of the mould closing apparatus.

## Revendications

1. Dispositif de fermeture de moule (50) pour machine de moulage par injection pour la fabrication de pièces en matière plastique, comprenant au moins deux plaques de montage de moule extérieures (63, 64) et un bâti de machine (54) sur lequel s'appuient les au moins deux plaques de montage de moule (63, 64), les au moins deux plaques de montage de moule (63, 64) étant déplaçables l'une par rapport à l'autre au moyen d'une propulsion (65, 66),
**caractérisé en ce que**
au moins une des plaques de montage de moule (63, 64) comporte un support (67, 68) sur lequel s'appuie un agrégat d'injection (51, 52).

2. Dispositif de fermeture de moule selon la revendication 1, **caractérisé en ce qu'**au moins la plaque de montage de moule déplaçable par rapport au bâti de machine comporte un support.

3. Dispositif de fermeture de moule selon la revendication 1 ou 2, **caractérisé en ce que** les plaques de montage de moule sont reliées entre elles par des colonnes.

4. Dispositif de fermeture de moule selon la revendication 3, **caractérisé en ce que** les colonnes sont fixées à une extrémité dans une plaque de soutien parallèle à une plaque de montage de moule associée, traversent à l'autre extrémité l'autre plaque de montage de moule et peuvent être verrouillées à celle-ci.

5. Dispositif de fermeture de moule selon la revendication 4, **caractérisé en ce que** la plaque de soutien et la plaque de montage de moule constituent une plaque en sandwich avec des pistons hydrauliques à pression interposés.

6. Dispositif de fermeture de moule selon la revendication 4, **caractérisé en ce qu'**entre la plaque de soutien et une plaque de montage de moule mobile, un système de fermeture à genouillère est disposé.

7. Dispositif de fermeture de moule selon la revendication 1, **caractérisé en ce que** les colonnes sont disposées à une extrémité dans une des plaques de montage de moule et présentent à l'autre extrémité des pistons qui sont guidés de manière réversible dans une unité à vérin respective reliée à l'autre plaque de montage de moule, l'unité de réglage composée de l'unité à piston et à vérin étant conçue pour exécuter le mouvement d'ouverture et de fermeture et pour générer la pression de fermeture du dispositif de fermeture de moule.
